# EUROPÄISCHE PATENTSCHRIFT

(11) **EP 1 612 127 B1**
(45) Veröffentlichungstag und Bekanntmachung des Hinweises auf die Patenterteilung: **06.08.2008**
(21) Anmeldenummer: 05013849.4
(22) Anmeldetag: 27.06.2005
(51) Int. Cl.: B62D 25/08, B62D 43/10, B60R 5/04

(54) **Kraftfahrzeug mit einem Kofferraum**
Motor vehicle with a luggage compartment
Véhicule automobile avec un coffre

(30) Priorität: 03.07.2004 DE 102004032248
(43) Veröffentlichungstag der Anmeldung: 04.01.2006
(73) Patentinhaber: Bayerische Motoren Werke Aktiengesellschaft, 80809 München (DE)
(72) Erfinder: Baer, Carmen, 80807 München (DE)

(56) Entgegenhaltungen:
- DE-A1- 10 147 620
- DE-A1-9102005 017 24
- FR-A- 2 852 571

## Beschreibung

Die Erfindung betrifft ein Kraftfahrzeug gemäß dem Oberbegriff des Anspruchs 1.

Es ist bereits ein Kraftfahrzeug bekannt, das einen Gepäckraum aufweist, der in einem Heckbereich eines Kraftfahrzeuges ausgebildet ist.

Aus der DE 101 47 620 A1 ist eine gattungsbildende Bodenstruktur im Heckladeraum eines Personenkraftwagens bekannt.

Aufgabe der Erfindung ist es, ein Kraftfahrzeug zu schaffen, bei dem der Gepäckraum einen einfachen Aufbau aufweist.

Diese Aufgabe wird durch die Merkmale des Anspruchs 1 gelöst.

Bei dem erfindungsgemäßen Kraftfahrzeug ist ein Gepäckraum am Heckbereich des Kraftfahrzeuges vorgesehen, bei dem der Gepäckraum-Bodenbereich mit unterschiedlichen Ausführungsformen eines Gepäckraumbodens versehen werden kann. Dies ist vorteilhafterweise dadurch möglich, dass die Befestigungsfunktion des Gepäckraumbodens durch einen an der Karosseriestruktur verschweißten Gepäckraumboden-Rahmen gebildet ist, der einen Befestigungsrahmen mit einer Aufnahmeöffnung für alle Ausführungsformen des Gepäckraumbodens festlegt. Der Aufbau des erfindungsgemäßen Gepäckraum-Bodenbereiches hat ferner den Vorteil, dass mit einem in der Form gleich bleibenden erfindungsgemäßen Gepäckraumboden-Rahmen unterschiedliche Formen eines Gepäckraumbodens eingebaut werden können.

In einer vorteilhaften Ausführungsform ist die Karosseriestruktur im Bereich des Gepäckraumbodens aus zwei gegenüberliegenden Längsträgern und mindestens einem Querträger gebildet. Der Querträger verbindet die Längsträger in Höhe von gegenüberliegenden Radhäusern. Die komplette Karosseriestruktur mit dem an der Karosseriestruktur befestigten Gepäckraumboden-Rahmen begrenzt eine Karosserieöffnung. Diese Karosserieöffnung hat den Vorteil, dass die Herstellung der Fahrzeugkarosserie im Heckbereich und die Montage von Bauteilen durch die bessere Zugänglichkeit in den Innenraum über die Karosserieöffnung und zu den zu der Karosserieöffnung benachbarten Innenflächen der Karosserie vereinfacht ist.

An den der Karosserieöffnung zugewandten Seitenwänden der gegenüberliegenden Längsträger und des Querträgers der Karosseriestruktur ist ein Befestigungsflansch ausgebildet, der weitestgehend in einer waagrechten Ebene liegt und im Wesentlichen eine ebene Oberfläche aufweist. An diesem Befestigungsflansch ist ein Befestigungsrand des Gepäckraumboden-Rahmens mit einer ebenen Oberfläche angeordnet. Durch die einander gegenüberliegenden ebenen Oberflächen ist eine einfache Montage und Abdichtung möglich.

In einer vorteilhaften Ausführungsform weist der Gepäckraumboden-Rahmen an seiner Unterseite einen umlaufenden Begrenzungsflansch auf, der sich an die Aufnahmeöffnung des Gepäckraumboden-Rahmens bzw. an den Befestigungsrand anschließt. Durch den erfindungsgemäßen Begrenzungsflansch ist es im montierten Zustand des Gepäckraumboden-Rahmens und vor dem Einbau des Gepäckraumbodens möglich, dass eine Unterbodenschutzmasse, wie beispielsweise PVC, an die Übergangsbereiche zwischen Karosserie, Gepäckraumboden-Rahmen in Höhe des Befestigungsrandes gespritzt werden kann, ohne dass die Unterbodenschutzmasse in den Fahrzeuginnenraum gelangt.

Zwischen der ebenen Oberfläche des Befestigungsrandes des Gepäckraumboden-Rahmens und einer dazu gegenüberliegenden ebenfalls ebenen Oberfläche eines Befestigungsrandes des Gepäckraumbodens ist eine umlaufende Dichtung angeordnet. Die ebene, geschlossene Dichtfläche zwischen dem Gepäckraumboden und dem Gepäckraumboden-Rahmen ermöglicht vorteilhafterweise eine sichere und einfache Abdichtung gegen Feuchtigkeit und Staub. Die Dichtung ist beispielsweise ein geschlossenzelliger EPDM-Schaum.

Durch die Ausbildung unterschiedlicher Ausführungsformen von Gepäckraumböden unter Verwendung des gleichen Gepäckraumboden-Rahmens ergibt sich eine einfache Anpassung an unterschiedliche Fahrzeugtypen, die beispielsweise am Fahrzeugboden auf einer Seite eine Auspuffanlage oder an beiden Seiten eine Auspuffanlage aufweisen. Bei der Fahrzeugmontage ist lediglich ein in der Form entsprechend angepasster Gepäckraumboden einzusteuern. Die Herstellung des erfindungsgemäßen Gepäckraum-Bodenbereiches ist preiswerter und variabler als eine herkömmliche Herstellmethode eines mit der Karosserie fest verbundenen Gepäckraumbodens.

Der erfindungsgemäße Gepäckraumboden ist über Befestigungselemente an dem Gepäckraumboden-Rahmen befestigt. Vorteilhafterweise sind an dem Gepäckraumboden-Rahmen die Befestigungselemente zur Befestigung des Gepäckraumbodens bereits vormontiert oder vorgefertigt, so dass kein zusätzlicher Arbeitsaufwand im Rohbau erforderlich ist. Dadurch vereinfachen sich die Montage und die Befestigung des erfindungsgemäßen Gepäckraumbodens. In einer vorteilhaften Ausführungsform sind die Befestigungselemente Gewindebolzen, die bereits beim Herstellungsvorgang des erfindungsgemäßen Gepäckraumboden-Rahmens an dem Gepäckraumboden-Rahmen direkt befestigt werden.

In einer vorteilhaften Ausführungsform ist der erfindungsgemäße Gepäckraumboden ein dreidimensionales Gebilde, das wannenförmige Vertiefungen aufweist, die als Staufächer nutzbar sind.

Der erfindungsgemäße Gepäckraumboden ist vorteilhafterweise aus einem Kunststoff hergestellt, so dass die Form des Gepäckraumbodens einfach variierbar ist.

An den Befestigungsstellen des Gepäckraumboden-Rahmens sind in einer vorteilhaften Ausführungsform in die Aufnahmeöffnung vorstehende, beispielsweise halbkreisförmige Befestigungsflansche vorgesehen. An den Befestigungsstellen des Gepäckraumbodens sind entsprechend geformte, beispielsweise halbkreisförmige Einbuchtungen mit einer ebenen Befestigungsfläche vorgesehen, die gegenüber der Dichtfläche zwischen dem Gepäckraumboden-Rahmen und dem Gepäckraumboden abgesenkt sind. Diese Bauweise erhöht die Steifigkeit des Gepäckraumbodens

Eine Ausführungsform der Erfindung wird nachstehend anhand der Zeichnungen beispielshalber beschrieben. Dabei zeigen:
- Fig. 1: eine Ansicht von oben auf eine Karosseriestruktur für einen Gepäckraum und auf einen Gepäckraumboden-Rahmen vor der Befestigung an der Karosseriestruktur,
- Fig. 2a: eine Ansicht von oben entsprechend der Fig. 1, bei der der Gepäckraumboden-Rahmen an der Karosseriestruktur befestigt ist,
- Fig. 2b: eine Schnittansicht längs der Linie I-I in der Fig. 1, in der die Befestigung des Gepäckraumboden-Rahmens an einem Längsträger der Karosseriestruktur dargestellt ist,
- Fig. 3: eine perspektivische Ansicht von oben auf den Gepäckraumboden-Rahmen, aus der eine um eine Aufnahmeöffnung des Gepäckraumboden-Rahmens umlaufende, ebene Dichtung hervorgeht,
- Fig. 4: eine perspektivische Ansicht auf eine Unterseite des Gepäckraumboden-Rahmens, in der ein um die Aufnahmeöffnung des Gepäckraumboden-Rahmens umlaufender Begrenzungsflansch ersichtlich ist,
- Fig. 5: eine perspektivische Ansicht von oben auf die Karosseriestruktur mit dem daran befestigten Gepäckraumboden-Rahmen vor der Montage eines Gepäckraumbodens und
- Fig. 6: eine perspektivische Ansicht von oben entsprechend der Fig. 5, bei der drei verschiedene Ausführungsformen von Gepäckraumböden mit wannenförmigen Vertiefungen gezeigt sind.

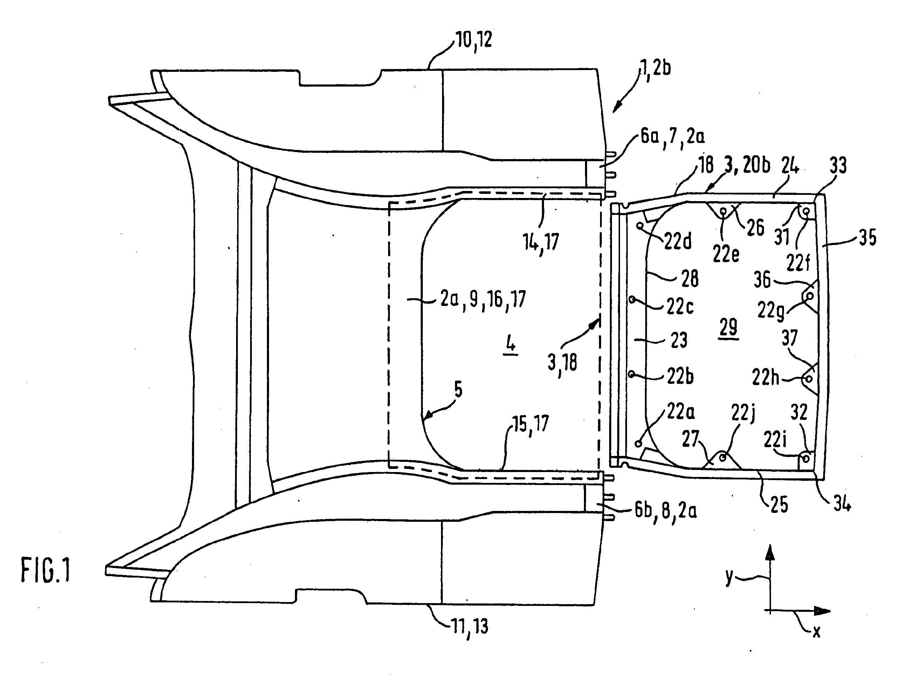

Die Fig. 1 zeigt einen Heckbereich 2b eines Kraftfahrzeuges 1 vor der Befestigung eines Gepäckraumboden-Rahmens 3 an einer U-förmigen Ausschnittsöffnung 4 einer Karosseriestruktur 5. Die Karosseriestruktur 5 mit der Ausschnittsöffnung 4 wird durch Endabschnitte 6a und 6b von zwei in Fahrzeuglängsrichtung x verlaufenden Längsträgern 7 und 8 sowie einem in Fahrzeugquerrichtung y angeordneten Querträger 9 gebildet.

Der Querträger 9 verläuft in der gezeigten Ausführungsform in Höhe jeweils eines hinteren Endes 10, 11 eines Radhauses 12, 13. An Seitenwänden 14, 15 und 16 der beiden Endabschnitte 6a, 6b der Längsträger 7, 8 sowie des Querträgers 9 ist ein in der Draufsicht U-förmiger Befestigungsflansch 17 ausgebildet. Der Befestigungsflansch 17 weist zumindest an seiner Oberseite eine im Wesentlichen ebene Oberfläche ohne Absätze, Vertiefungen oder Vorsprünge auf.

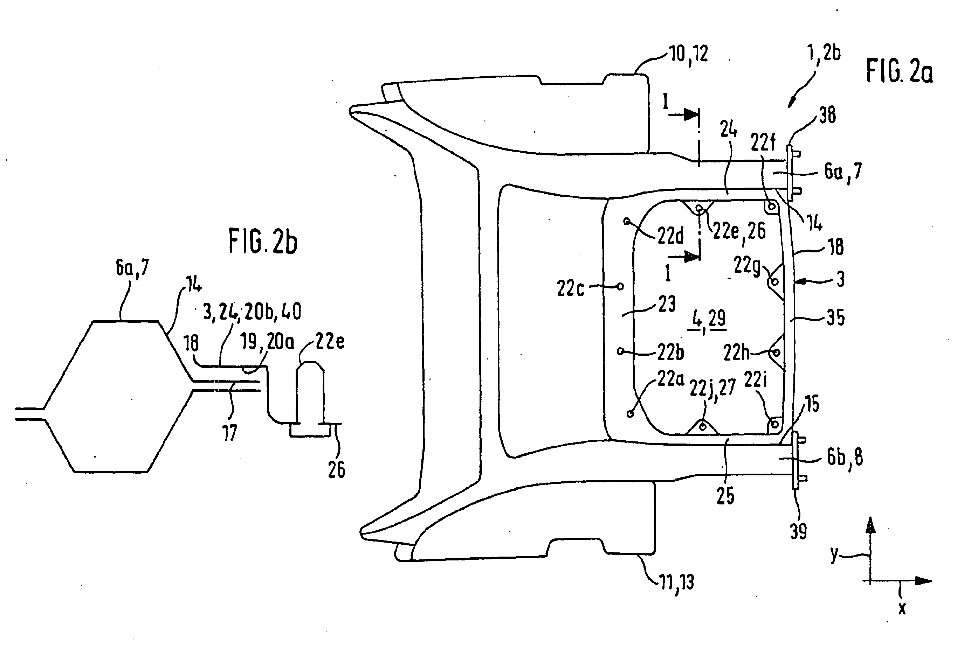

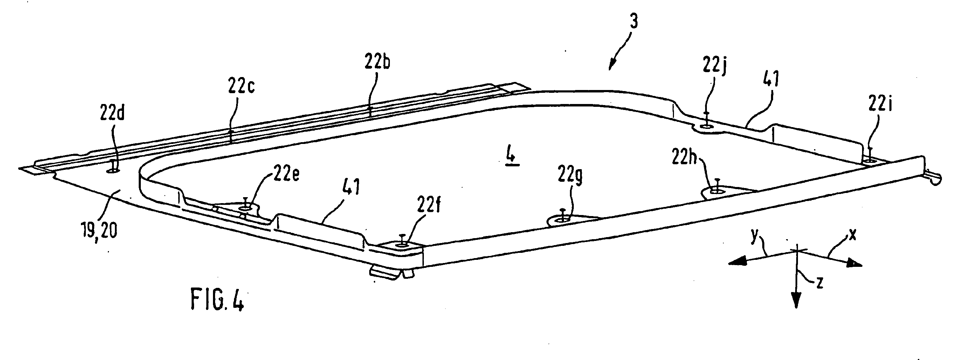

In der Fig. 1 ist in strichlierten Linien ein Außenrand 18 des Gepäckraumboden-Rahmens 3 eingezeichnet. Der Gepäckraumboden-Rahmen 3 weist an seiner Unterseite 19, die in den Fig. 2b und 4 dargestellt ist, einen unteren, in der Draufsicht U-förmigen Befestigungsrand 20a auf. Der Befestigungsrand 20a hat ebenfalls wie der Befestigungsflansch 17 eine ebene Oberfläche ohne Absätze, Vorsprünge oder Vertiefungen.

Auf einer Oberseite 40 des Gepäckraumboden-Rahmens 3 ist an Quer- und Längsstegen 23, 35 und 24,25 ein oberer Befestigungsrand 20b ausgebildet. Zwischen dem oberen Befestigungsrand 20b und einem Befestigungsrand oder Befestigungsflansch 42 des Gepäckraumbodens 30a,b,c ist eine umlaufende Dichtung 21 angeordnet. In einer Ausführungsform ist die Dichtung 21 am Gepäckraumboden 30a,b,c vormontiert ist. Die Dichtung 21 besteht beispielsweise aus einem geschlossenzelligen EPDM-Schaum.

Die ebene Oberfläche des oberen Befestigungsrandes 20b des Gepäckraumboden-Rahmens 3 weist keine Flanschsprünge oder dergleichen auf. Dadurch ergibt sich über die Dichtung 21 zwischen dem Gepäckraumboden 30a,b,c und dem Gepäckraumboden-Rahmen 3 eine einfache und sichere Abdichtung gegen das Eindringen von Nässe in den Fahrzeuginnenraum bzw. in den Gepäckraum. Die Befestigung des Gepäckraumbodens 30a,b,c am Gepäckraumboden-Rahmen 3 erfolgt beispielsweise durch Verkleben und/oder Verschrauben oder dergleichen.

In der Fig. 1 sind am Gepäckraumboden-Rahmen 3 angeordnete Befestigungselemente 22a bis 22j dargestellt. Die Befestigungselemente 22a bis 22d sind an dem Quersteg 23 des Gepäckraumboden-Rahmens 3 ausgebildet. Der Quersteg 23 des Gepäckraumboden-Rahmens 3 befindet sich im montierten Zustand oberhalb des Querträgers 9 der Karosserie.

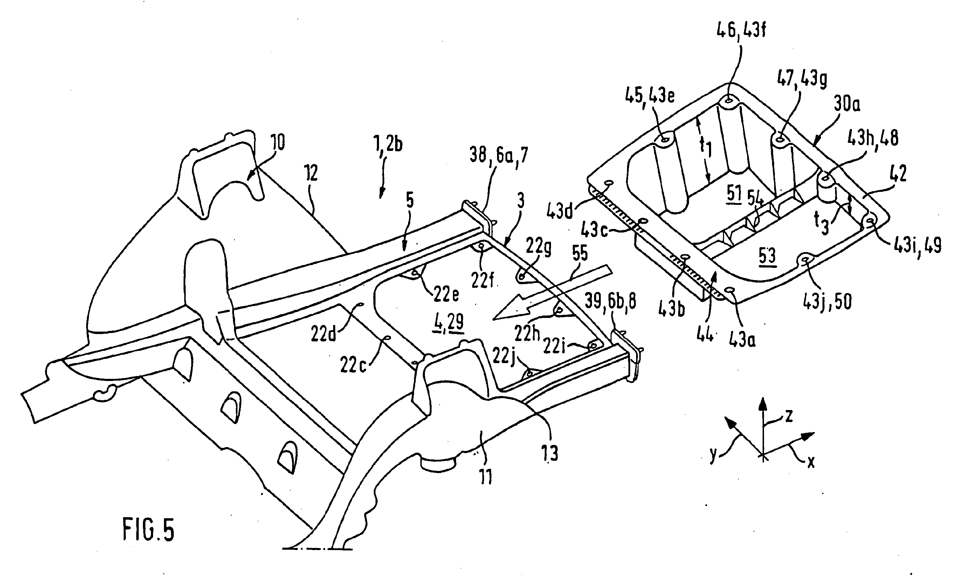

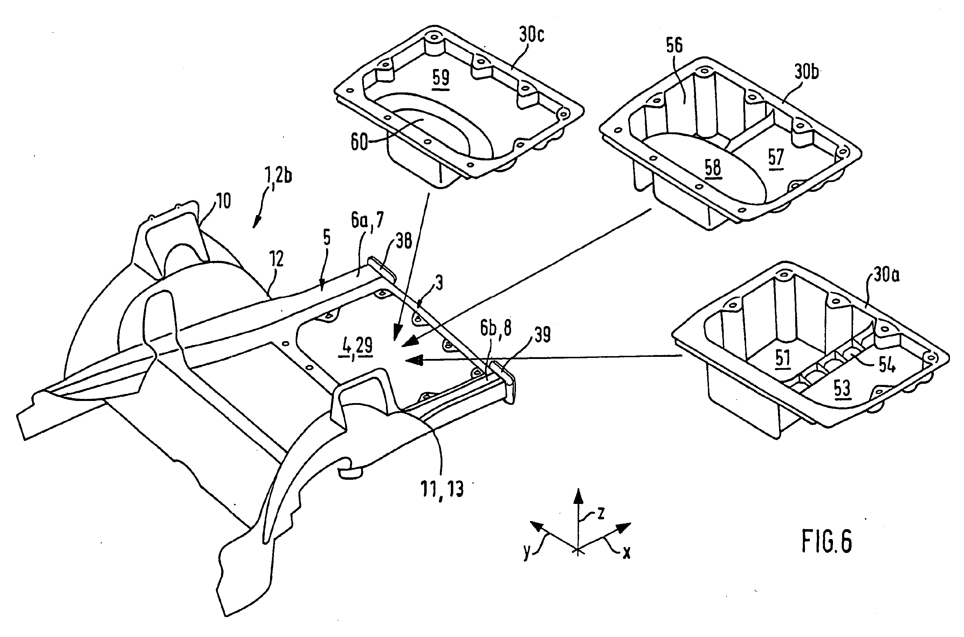

An den gegenüberliegenden Längsstegen 24 und 25 des Gepäckraumboden-Rahmens 3 ist jeweils ein weiteres Befestigungselement 22e und 22j vorgesehen. Die Befestigungselemente 22e und 22j befinden sich jeweils auf einem halbkreisförmigen Flansch 26, 27, der an einem Innenrand 28 des Gepäckraumboden-Rahmens 3 angeformt ist. Der Innenrand 28 begrenzt eine Aufnahmeöffnung 29, die zur Anordnung des Gepäckraumbodens 30a,b,c dient. Der Gepäckraumboden 30 a,b,c ist beispielsweise in den Fig. 5 und Fig. 6 gezeigt.

Die Befestigungselemente 22f und 22i befinden sich auf weiteren Flanschen 31, 32, die ebenfalls am Innenrand 28 vorgesehen sind und in die Aufnahmeöffnung 29 des Gepäckraumboden-Rahmens 3 ragen. Die Flansche 31, 32 sind in Ecken 33, 34 zwischen den Längsstegen 24, 25 und einem vom Kraftfahrzeug 1 weggewandten Querträger 35 ausgebildet. Die Befestigungselemente 22e bis 22j sind über die Flansche 26, 31, 36, 37, 32, 27 tiefer als die Befestigungselemente 22a bis 22d am Quersteg 23 des Gepäckraumboden-Rahmens 3 angeordnet.

Am Quersteg 35 sind die Befestigungselemente 22g und 22h vorgesehen, die auf den Flanschen 36, 37 angeordnet sind. Die Flansche 36, 37 sind am Innenrand 28 des Querstegs 35 bzw. des Gepäckraumboden-Rahmens 3 vorgesehen.

Die Fig. 2a zeigt den Gepäckraumboden-Rahmen 3 in seiner in der Karosserie-Ausschnittsöffnung 4 montierten Lage. Der hintere Quersteg 35 schließt in Höhe der Enden 38, 39 der Längsträger 7, 8 ab. Die beiden Längsstege 24, 25 des Gepäckraumboden-Rahmens 3 verlaufen parallel zu den Seitenwänden 14, 15 der Längsträger 7, 8. In der Schnittansicht der Fig. 2b ist die Befestigung des Gepäckraumboden-Rahmens 3 über den Befestigungsrand 20a an dem Befestigungsflansch 17 der Karosseriestruktur 5 dargestellt.

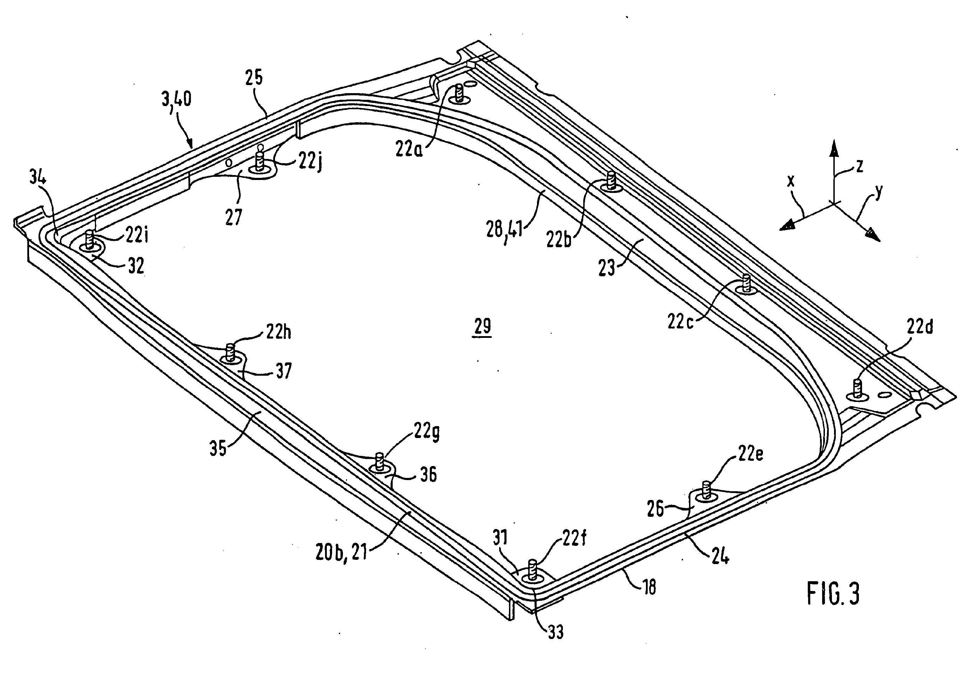

Die Fig. 3 zeigt eine vergrößerte, perspektivische Ansicht von oben auf die Oberseite 40 des Gepäckraumboden-Rahmens 3. Aus der Fig. 3 ist erkennbar, dass die Befestigungselemente 22a bis 22j Bolzen sind, die mit einem Gewinde versehen sind. Ferner ist an dem Innenrand 28 der Aufnahmeöffnung 29 ein umlaufender Begrenzungsflansch 41 erkennbar, der sich von der Oberseite 40 in Richtung zur Unterseite 19 erstreckt.

Der Begrenzungsflansch 41 ermöglicht es, dass eine Unterbodenschutzmasse auf die der Fahrbahn zugewandten Unterseite des Fahrzeugbodens gespritzt werden kann, ohne dass die Unterbodenschutzmasse in den Fahrzeuginnenraum bzw. Gepäckraum eindringen kann.

Die Fig. 4 zeigt die Unterseite 19 des Gepäckraumboden-Rahmens 3. Aus der Fig. 4 ist die ebene Oberfläche des umlaufenden Befestigungsrandes 20a erkennbar. Ferner ist in der Fig. 4 der umlaufende Begrenzungsflansch 41 dargestellt, der sich an den Befestigungsrand 20a anschließt.

Die Fig. 5 zeigt eine perspektivische Ansicht von oben auf den Heckbereich 2b nach dem Einbau des Gepäckraumboden-Rahmens 3 und vor dem Einbau einer Ausführungsform des Gepäckraumbodens 30a. Der Gepäckraumboden 30a weist einen umlaufenden, ebenen Befestigungsflansch 42 auf, an dessen Unterseite eine umlaufende Dichtung 21 angeordnet ist. Im befestigten Zustand des Gepäckraumbodens 30a mit der Oberseite 40 des Gepäckraumboden-Rahmens 3 dient die Dichtung 21 zur Abdichtung gegen Feuchtigkeit.

An dem Befestigungsflansch 42 sind Öffnungen 43a bis 43j in Höhe der Befestigungselemente 22a bis 22j ausgebildet. Die Öffnungen 43a bis 43d befinden sich an einem Querflansch 44. Die Öffnungen 43e bis 43j sind an vorstehenden, tiefer liegenden Flanschen 45 bis 50 ausgebildet. Durch die Abstufung der Flansche 45 bis 50 zu dem Befestigungsflansch 42 und durch die Verlängerung der Flansche 45 bis 50 bis zu der jeweiligen Bodenfläche des Gepäckraumbodens 30a ergibt sich eine Versteifung des Gepäckraumbodens 30a.

Der Gepäckraumboden 30a ist in zwei Staufächer 51 und 53 unterteilt, die nach oben hin offen sind. Das Staufach 53 weist eine geringere Tiefe t₃ als das Staufach 51 mit der Tiefe t₁ auf. Dies ist beispielsweise dadurch bedingt, dass unterhalb des Staufaches 53 eine nicht dargestellte Abgasanlage verläuft. Zwischen den Staufächern 51 und 53 sind Versteifungsstege 54 ausgebildet. Ein Pfeil 55 zeigt die Montagerichtung des Gepäckraumbodens 30a.

Die Fig. 6 zeigt neben dem Gepäckraumboden 30a zwei weitere Ausführungsformen eines Gepäckraumbodens 30b und 30c. Der Gepäckraumboden 30b ist in drei Staufächer 56, 57, 58 mit unterschiedlichen Tiefen und Volumen unterteilt. In den Staufächern 56, 57, 58 können auch FahrzeugBauteile untergebracht werden. So können bei einem Cabriolet in den Staufächern 58 bzw. 60 die Hydraulikpumpen für das Verdeck untergebracht sein. Der Gepäckraumboden 30c ist im Wesentlichen mit zwei Staufächern 59, 60 versehen, die ebenfalls unterschiedliche Tiefen, Formen und Volumen aufweisen.

## Patentansprüche

1. Kraftfahrzeug mit einem Gepäckraum, der in einem Heckbereich einer Karosserie ausgebildet ist, mit einem Gepäckraumboden, in dem Staufächer ausgebildet sind, wobei in einer Karosseriestruktur (5) in Höhe eines Fahrzeugbodens (2a) am Fahrzeugheck (2b) eine U-förmige Ausschnittsöffnung (4) ausgebildet ist, wobei an der Ausschnittsöffnung (4) ein Gepäckraumboden-Rahmen (3) angeordnet ist und wobei ein separater Gepäckraumboden (30, 30a bis 30c) an dem Gepäckraumboden-Rahmen (3) befestigt ist,
**dadurch gekennzeichnet, dass** die Karosseriestruktur (5) mit der U-förmigen Ausschnittsöffnung (4) durch Endabschnitte (6a, 6b) zweier in Fahrzeuglängsrichtung (x) verlaufender und in Fahrzeugquerrichtung (y) zueinander beabstandeter Längsträger (7, 8) und durch einen Querträger (9), der in Höhe von Radhäusern (12, 13) in Fahrzeugquerrichtung (y) verläuft, gebildet ist.

2. Kraftfahrzeug nach den Anspruch 1,
**dadurch gekennzeichnet, dass** an den Seitenwänden (14, 15, 16) der Ausschnittsöffnung (4) ein U-förmiger, in einer horizontalen Ebene x-y liegender Befestigungsflansch (17) ausgebildet ist und dass an dem Befestigungsflansch (17) ein entsprechend geformter Befestigungsrand (20a) des Gepäckraumboden-Rahmens (3) befestigt ist.

3. Kraftfahrzeug nach den Ansprüchen 1 oder 2,
**dadurch gekennzeichnet, dass** der Gepäckraumboden-Rahmen (3) Befestigungselemente (22a bis 22j) und eine Aufnahmeöffnung (29) aufweist.

4. Kraftfahrzeug nach den Ansprüchen 2 oder 3,
**dadurch gekennzeichnet, dass** die Befestigungselemente (22a bis 22j) bereits vor der Montage des Gepäckraumboden-Rahmens (3) an dem Befestigungsflansch (17) der Karosseriestruktur (5) an dem Gepäckraumboden-Rahmen (3) angeordnet sind.

5. Kraftfahrzeug nach den Ansprüchen 3 oder 4,
**dadurch gekennzeichnet, dass** die Befestigungselemente (22a bis 22j) für eine Niet- und/oder Schraubverbindung ausgelegt sind.

6. Kraftfahrzeug nach einem der vorhergehenden Ansprüche,
**dadurch gekennzeichnet, dass** eine Dichtung (21) zwischen dem Gepäckraumboden (30, 30a bis 30c) und dem Gepäckraumboden-Rahmen (3) vorgesehen ist.

7. Kraftfahrzeug nach Anspruch 6,
**dadurch gekennzeichnet, dass** ein oberer Befestigungsrand (20b) des Gepäckraumboden-Rahmens (3) eine ebene Oberfläche als Befestigungsfläche für die Dichtung (21) in Höhe einer ebenen Oberfläche eines Befestigungsflansches (42) des Gepäckraumbodens (30, 30a bis 30c) aufweist.

8. Kraftfahrzeug nach den Ansprüchen 6 oder 7,
**dadurch gekennzeichnet, dass** die Dichtung (21) aus einem geschlossenzelligen EPDM-Schaum besteht.

9. Kraftfahrzeug nach Anspruch 3,
**dadurch gekennzeichnet, dass** der Gepäckraumboden-Rahmen (3) einen Begrenzungsflansch (41) aufweist, der die Aufnahmeöffnung (29) des Gepäckraumboden-Rahmens (3) umgibt.

10. Kraftfahrzeug nach einem der vorhergehenden Ansprüche,
**dadurch gekennzeichnet, dass** der Gepäckraumboden-Rahmen (3) aus einem Metall oder einem Leichtmetall hergestellt ist.

11. Kraftfahrzeug nach einem der vorhergehenden Ansprüche,
**dadurch gekennzeichnet, dass** der Gepäckraumboden (30, 30a bis 30c) mit Staufächern (51, 53; 56, 57, 58; 59, 60) versehen ist.

12. Kraftfahrzeug nach einem der vorhergehenden Ansprüche,
**dadurch gekennzeichnet, dass** der Gepäckraumboden (30, 30a bis 30c) aus einem formstabilen Kunststoff hergestellt ist.

## Claims

1. A motor vehicle with a luggage space or boot in the rear region of the body, comprising a boot floor formed with luggage compartments, wherein a U-shaped cut-out or opening (4) is formed in a body structure (5) level with a floor (2a) at the back (2b) of the vehicle, wherein a boot floor frame (3) is disposed on the opening (4) and wherein a separate boot floor (30, 30a to 30c) is fastened to the boot floor frame (3),
**characterised in that** the body structure (5) and the U-shaped opening (4) are formed by end portions (6a, 6b) of two longitudinal bearers (7, 8) extending in the longitudinal direction (x) of the vehicle and spaced apart in the transverse direction (y) of the vehicle, and also formed by a transverse bearer (9) level with wheel housings (12, 13) in the longitudinal direction (y) of the vehicle.

2. A vehicle according to claim 1,
**characterised in that** a U-shaped fastening flange (17) in a horizontal plane (x-y) is formed on the side walls (14, 15, 16) of the opening (4) and a correspondingly shaped fastening edge (20a) of the boot floor frame (3) is fastened to the flange (17).

3. A vehicle according to claim 1 or claim 2,
**characterised in that** the boot floor frame (3) has fastening elements (22a to 22j) and a receiving opening (29).

4. A vehicle according to claim 2 or claim 3,
**characterised in that** before the boot floor frame (3) is mounted on the fastening flange (17) of the body structure (5) the fastening elements (22a to 22j) are disposed on the boot floor frame (3).

5. A vehicle according to claim 3 or claim 4,
**characterised in that** the fastening elements (22a to 22j) are designed for a rivet and/or screw connection.

6. A vehicle according to any of the preceding claims,
**characterised in that** a seal (21) is provided between the boot floor (30, 30a to 30c) and the boot floor frame (3).

7. A vehicle according to claim 6,
**characterised in that** an upper fastening edge (20b) of the boot floor frame (3) has a flat surface for fastening the seal (21) at the level of a flat surface of a fastening flange (42) on the boot floor (30, 30a to 30c).

8. A vehicle according to claim 6 or claim 7,
**characterised in that** the seal (21) is made of a closed-cell EPDM foam.

9. A vehicle according to claim 3,
**characterised in that** the boot floor frame (3) has a boundary flange (41) surrounding the opening (29) in the boot floor frame (3).

10. A vehicle according to any of the preceding claims,
**characterised in that** the boot floor frame (3) is made of a metal or light metal.

11. A vehicle according to any of the preceding claims,
**characterised in that** the boot floor (30, 30a to 30c) has stowage compartments (51, 53; 56, 57, 58; 59, 60).

12. A vehicle according to any of the preceding claims,
**characterised in that** the boot floor (30, 30a to 30c) is made of a dimensionally stable plastics material.

## Revendications

1. Véhicule automobile comportant un coffre à bagages (1) réalisé dans la région arrière de la carrosserie, ayant un fond de coffre dans lequel sont constitués des compartiments de stockage,
et dans une structure de carrosserie (5), au niveau du fond (2a) du véhicule, l'arrière (2b) du véhicule comporte une ouverture de découpe en forme de U (4),
l'ouverture de découpe (4) comporte un cadre de fond de coffre à bagages (3) et
un fond de coffre à bagages, séparé, (30, 30a...30c) est fixé au cadre (3) du fond de coffre à bagages,
**caractérisé en ce que**
la structure (5) de la carrosserie avec l'ouverture découpée en forme de U (4) est constituée par deux segments d'extrémité (6a, 6b) de deux longerons (7, 8) dirigés dans la direction longitudinale (x) du véhicule et écartés dans la direction transversale (y) du véhicule, ainsi que par une traverse (9) passant à la hauteur des logements de roues (12, 13) dans la direction transversale (y) du véhicule.

2. Véhicule automobile selon la revendication 1,
**caractérisé en ce que**
les parois latérales (14, 15, 16) de l'ouverture découpée (4) comportent une bride de fixation (17) en forme de U située dans un plan horizontal (x-y) et
un bord de fixation (20a) de forme appropriée au cadre (3) du fond du coffre à bagages est fixé à la bride de fixation (17).

3. Véhicule automobile selon l'une des revendications 1 ou 2,
**caractérisé en ce que**
le cadre du fond du coffre à bagages (3) comporte des éléments de fixation (22a...22j) ainsi qu'une ouverture de réception (29).

4. Véhicule automobile selon l'une des revendications 2 ou 3,
**caractérisé en ce que**
les éléments de fixation (22a...22j) sont prévus sur le cadre de fond de coffre à bagages (3) avant le montage du cadre de fond de coffre à bagages (3) sur la bride de fixation (17) de la structure de carrosserie (5).

5. Véhicule automobile selon les revendications 3 ou 4,
**caractérisé en ce que**
les éléments de fixation (22a...22j) sont conçus pour des liaisons par rivets et/ou des liaisons par vis.

6. Véhicule automobile selon l'une des revendications précédentes,
**caractérisé par**
un joint (21) prévu entre le fond de coffre à bagages (30, 30a-30c) et le cadre de fond de coffre à bagages (3).

7. Véhicule automobile selon la revendication 6,
**caractérisé par**
un bord de fixation supérieur (20b) du cadre de fond de coffre à bagages (3) qui a une surface supérieure plane comme surface de fixation pour le joint (21) à la hauteur d'une surface supérieure plane d'une bride de fixation (42) du fond de coffre à bagages (30, 30a-30c).

8. Véhicule automobile selon les revendications 6 ou 7,
**caractérisé en ce que**
le joint (21) est de la mousse EPDM à cellules fermées.

9. Véhicule automobile selon la revendication 3,
**caractérisé en ce que**
le cadre de fond de coffre à bagages (3) comporte une bride de délimitation (41) qui entoure l'ouverture de réception (29) du cadre de fond de coffre à bagages (3).

10. Véhicule automobile selon l'une des revendications précédentes,
**caractérisé en ce que**
le cadre de fond de coffre à bagages (3) est en un métal ou en un métal léger.

11. Véhicule automobile selon l'une quelconque des revendications précédentes,
**caractérisé en ce que**
le fond de coffre à bagages (30, 30a-30c) est muni de compartiments de stockage (51, 53 ; 56, 57, 58 ; 59, 60).

12. Véhicule automobile selon l'une des revendications précédentes,
**caractérisé en ce que**
le fond de coffre à bagages (30, 30a-30c) est en une matière plastique de forme stable.
